# EUROPÄISCHE PATENTSCHRIFT

(11) **EP 3 537 128 B1**
(45) Veröffentlichungstag und Bekanntmachung des Hinweises auf die Patenterteilung: **11.11.2020**
(21) Anmeldenummer: 19156146.3
(22) Anmeldetag: 08.02.2019
(51) Int. Cl.: G01L 9/00, G01L 9/04, G01L 1/22

(54) **KRAFT- ODER DRUCKSENSOR**
FORCE OR PRESSURE SENSOR
CAPTEUR DE FORCE OU DE PRESSION

(30) Priorität: 05.03.2018 DE 102018203255
(43) Veröffentlichungstag der Anmeldung: 11.09.2019
(73) Patentinhaber: Hoffmann + Krippner GmbH, 74722 Buchen (DE)
(72) Erfinder: Berres, Stefan, 74731 Walldürn (DE)
(74) Vertreter: Patent- und Rechtsanwälte Ullrich & Naumann

(56) Entgegenhaltungen:
- US-A- 4 929 804
- US-A1- 2016 327 441
- US-A1- 2017 261 387

## Beschreibung

Die vorliegende Erfindung betrifft einen Sensor mit einem mit einer elektrischen Versorgungsspannung beaufschlagbaren Detektionsbereich, wobei sich der elektrische Widerstand des Detektionsbereichs unter Einwirkung von Kraft oder Druck verändert, so dass ein kraft- und/oder druckabhängiges Ausgangssignal erzeugbar ist.

Sensoren der eingangs genannten Art sind aus der Praxis bekannt und existieren in unterschiedlichen Ausführungsformen. Beispielsweise kann ein solcher Sensor als Force Sensing Resistor, FSR, ausgebildet sein, wobei ein Messelement seinen elektrischen Widerstand unter Einwirkung von Kraft oder Druck verändert. Ein mittels eines derartigen Sensors erzeugtes Ausgangssignal muss jedoch elektronisch verstärkt oder verarbeitet werden, damit dieses Ausgangssignal in geeigneter Weise genutzt werden kann oder aussagekräftig ist.

Des Weiteren existieren Drucksensoren in Form von Dehnungsmessstreifen. Des Weiteren ist aus der DE 10 2007 000 364 A1 ein Sensor in Form eines Manometers mit elektrischem Messwertaufnehmer bekannt, bei dem ein Biegeabschnitt mit darauf angeordneten Widerständen verformbar ist und die Formänderung in ein elektrisches Ausgangssignal umwandelbar ist.

Bei sämtlichen bekannten Sensoren ist es jedoch erforderlich, die erzeugten Ausgangssignale mittels einer elektronischen Schaltung zu verstärken oder zu bearbeiten, um einen geeigneten Nutzen aus den Ausgangssignalen zu ziehen. Dies macht die bekannten Sensoren konstruktiv aufwändig und teuer.

Weiterer Stand der Technik ist aus US 2016/327441 A1, US 4 929 804 A und US 2017/261387 A1 bekannt.

Der vorliegenden Erfindung liegt daher die Aufgabe zugrunde, einen Sensor der eingangs genannten Art anzugeben, bei dem eine vielseitige Nutzung mit konstruktiv einfachen und kostengünstigen Mitteln ermöglicht ist.

Erfindungsgemäß wird die voranstehende Aufgabe durch einen Sensor mit den Merkmalen des Anspruchs 1 gelöst.

In erfindungsgemäßer Weise ist erkannt worden, dass durch geschickte Ausgestaltung des Detektionsbereichs die voranstehende Aufgabe auf überraschend einfache Weise lösbar ist. Hierzu weist der Detektionsbereich zum einen zwei räumlich ineinander greifend angeordnete und elektrisch voneinander getrennte Leiterbahnstrukturen auf. Die Leiterbahnstrukturen sind dabei quasi nebeneinander in einem derartigen Abstand voneinander angeordnet, dass in einem unbetätigten Zustand des Sensors keine elektrische Verbindung zwischen den beiden Leiterbahnstrukturen vorliegt. Des Weiteren weist der Detektionsbereich eine von den Leiterbahnstrukturen in einem unbetätigten Zustand des Sensors beabstandet angeordnete Paste auf. In diesem unbetätigten Zustand des Sensors befinden sich somit weder die Leiterbahnstrukturen untereinander noch eine oder mehrere der Leiterbahnstrukturen mit der Paste in einem elektrischen Kontakt. Bei einer Betätigung des Sensors wird auf die Paste eine Kraft oder ein Druck ausgeübt, so dass sich die Paste aufgrund der ausgeübten Kraft oder des ausgeübten Drucks in Richtung Leiterbahnstrukturen bewegt. Hierdurch lässt sich eine elektrische Verbindung zumindest eines Teilbereichs der beiden Leiterbahnstrukturen untereinander durch die Paste erzeugen, was eine Reduzierung des elektrischen Widerstands des Detektionsbereichs bewirkt. Dabei verändert sich das erzeugte Ausgangssignal kraft- und/oder druckabhängig, wobei durch geschickte Anordnung und/oder Auswahl der Leiterbahnstrukturen und der Paste ein Ausgangssignal erzeugbar ist, das ohne weitere aktive Elektronik und damit Verstärkung oder Verarbeitung gemessen und genutzt werden kann. Hierbei lässt sich ein nahezu linearer Bereich des Ausgangssignals erzeugen, das sich in Abhängigkeit von der einwirkenden Kraft oder des einwirkenden Drucks linear verändert. Dabei kann das Ausgangssignal bis zu 90% und mehr der Versorgungsspannung betragen.

Im Ergebnis ist mit dem erfindungsgemäßen Sensor ein Sensor angegeben, bei dem eine vielseitige Nutzung mit konstruktiv einfachen und kostengünstigen Mitteln ermöglicht ist. Beispielsweise lassen sich Gewichte oder Füllstände eines Behälters mit dem erfindungsgemäßen Sensor sehr einfach und kostengünstig messen.

Im Konkreten können die Leiterbahnstrukturen und/oder die Paste und/oder mindestens ein geeigneter Widerstand des Sensors derart gewählt und/oder dimensioniert und/oder zueinander angeordnet und/oder miteinander verschaltet sein, dass zumindest in einem Teilbereich einer Kennlinie von Kraft oder Druck und dem Ausgangssignal ein im Wesentlichen linearer Kennlinienverlauf erzeugbar ist. Dieser Teilbereich der Kennlinie kann in sehr einfacher Weise direkt, d.h. ohne Verstärkung oder weitere Verarbeitung des zugrundeliegenden Ausgangssignals, genutzt werden, beispielsweise für die Messung von Gewichten oder Füllständen eines Behälters. Bei dem erfindungsgemäßen Sensor kann somit ein geschicktes Zusammenspiel von Leiterbahnstrukturen, Paste und gewählten Widerständen des Sensors vorliegen, um einen im Wesentlichen linearen Kennlinienverlauf zu erzeugen.

Bei einer vorteilhaften Ausführungsform können die Leiterbahnstrukturen jeweils kammartig ausgebildet sein. Dabei sind im Konkreten zwei separate Leiterbahnstrukturen bereitgestellt die jeweils eine kammartige Anordnung bilden. Diese beiden "Kämme" werden dann ineinander greifend angeordnet, wobei sich die einzelnen Kammzinken nicht berühren, um eine elektrische Verbindung zwischen den beiden Leiterbahnstrukturen - den Kämmen - im unbetätigten Zustand des Sensors zu vermeiden. Es sind jedoch auch andere Ausbildungen der Leiterbahnstrukturen denkbar, beispielsweise einzelne Leiterbahnstrukturen mit abstehenden, vorzugsweise dreieckigen, Zacken, die dann ebenfalls räumlich ineinander greifend, aber ohne Berührung im unbetätigten Zustand, angeordnet sind. In jedem Fall ist die Ausbildung und Anordnung der Leiterbahnstrukturen derart zu wählen, dass bei einer Betätigung des Sensors eine elektrische Verbindung zumindest eines Teilbereichs der beiden Leiterbahnstrukturen mittels der Paste erreichbar ist. Bei jeder Form von Leiterbahnstrukturen verändert sich der Widerstand des Detektionsbereichs unter Einwirkung von Kraft oder Druck derart, dass der Widerstand entsprechend einer Zunahme von Kraft oder Druck geringer wird.

In weiter vorteilhafter Weise kann die Paste eine druckabhängige Paste sein, deren Durchgangswiderstand sich bei Ausübung von Kraft oder Druck auf die Paste verändert. Letztendlich ist dadurch realisiert, dass sich der elektrische Widerstand des Detektionsbereichs nicht nur durch das Erreichen einer elektrischen Verbindung zumindest eines Teilbereichs der beiden Leiterbahnstrukturen verändert, sondern auch in der Paste selbst, wobei sich der Widerstand bei zunehmendem Druck oder Kraft auf die Paste verringert. Derartige Pasten sind im Stand der Technik bekannt und weisen beispielsweise Graphit und/oder Polymere in einer geeigneten Pastenmischung auf. Zur Realisierung eines besonders sicheren Betriebs des Sensors kann zwischen den Leiterbahnstrukturen und der Paste ein Abstandshalter angeordnet sein. Ein derartiger Abstandshalter verhindert auf sichere Weise ein ungewünschtes Berühren der Paste und der Leiterbahnstrukturen in einem unbetätigten Zustand des Sensors. Ein derartiger Abstandshalter kann beispielsweise aus Kunststoff ausgebildet sein und mehrere Einzelelemente aufweisen, die in geeigneter Weise neben den Leiterbahnstrukturen auf einem Trägermedium angeordnet sein können.

Erfindungsgemäß und im Hinblick auf ein sicheres Erreichen eines im Wesentlichen linearen Kennlinienverlaufs und/oder einer Nutzbarkeit des Sensors ohne eine verstärkende oder bearbeitende zusätzliche aktive elektronische Schaltung ist auf der den Leiterbahnstrukturen zugewandten Seite der vorzugsweise flächig angeordneten Paste eine Silber und/oder Graphit enthaltende Schicht angeordnet sein. Diese Schicht bewirkt eine Erhöhung der elektrischen Leitfähigkeit des Übergangsbereichs zwischen Leiterbahnstrukturen und Paste, wodurch der Einfluss der Paste an der auch durch die Paste mit beeinflussten Veränderung des Übergangswiderstands zwischen Leiterbahnstrukturen und Paste reduziert werden kann. In konstruktiv besonders einfacher Weise können oder kann die Leiterbahnstrukturen und/oder mindestens ein Widerstand und/oder die Paste auf ein bedruckbares Medium, vorzugsweise auf eine Folie oder Leiterplatte, aufgedruckt oder aufgebracht sein. Dabei ist ein Aufbringen per Siebdruck besonders einfach und sicher realisierbar. Jedoch sind auch andere Formen des Aufbringens oder Aufdruckens je nach konkretem Anwendungsfall möglich.

Bei einer weiterhin konstruktiv besonders einfachen Ausgestaltung kann der Sensor zwei in Reihe geschaltete Widerstände und einen zu einem der beiden Widerstände parallel geschalteten und durch den Detektionsbereich gebildeten weiteren Widerstand aufweisen. Hierdurch ist letztendlich die Form eines Spannungsteilers realisiert, wobei der durch den Detektionsbereich gebildete Wiederstand durch die Einwirkung von Kraft oder Druck veränderbar ist. Dabei können die beiden in Reihe geschalteten Widerstände derart in einem vorgegebenen Verhältnis dimensioniert werden, dass in Kombination mit dem veränderbaren weiteren Widerstand ein im Wesentlichen lineares Ausgangssignal - in Abhängigkeit von Kraft und/oder Druck - erzeugbar ist.

Im Hinblick auf eine besonders einfache und vielseitige Nutzung des Sensors kann das Ausgangssignal an einem der beiden Widerstände abgreifbar sein. Je nach individueller Anforderung kann hierzu entweder der eine oder der andere der beiden in Reihe geschalteten Widerstände genutzt werden.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines erfindungsgemäßen Sensors,
- Fig. 2: in einer geschnittenen Darstellung, quer durch den Detektionsbereich, das Ausführungsbeispiel aus Fig. 1 und
- Fig. 3: in einer Skizze im linken Bereich die elektrische Anordnung der Widerstände und der Leiterbahnstrukturen des Ausführungsbeispiels aus Fig. 1 und im rechten Bereich einen Schaltplan des Ausführungsbeispiels aus Fig. 1.

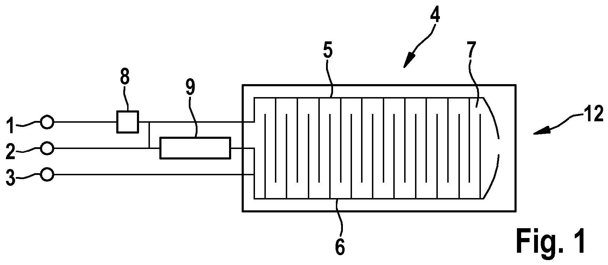

Fig. 1 zeigt in einer schematischen Darstellung ein Ausführungsbeispiel des erfindungsgemäßen Sensors, wobei der Sensor drei Anschlussleiter aufweist, die als Leiter 1, Leiter 2 und Leiter 3 bezeichnet sind. Über diesen Anschlussbereich wird ein Detektionsbereich 4 mit einer elektrischen Versorgungsspannung beaufschlagt, wobei sich der elektrische Widerstand des Detektionsbereichs 4 unter Einwirkung von Kraft oder Druck verändert, so dass ein kraft- und/oder druckabhängiges Ausgangssignal erzeugbar ist, das über den Anschlussbereich des Sensors abgreifbar ist.

Der Detektionsbereich 4 weist zwei räumlich ineinander greifend angeordnete und elektrisch voneinander getrennte Leiterbahnstrukturen 5 und 6 auf. Die Leiterbahnstrukturen 5 und 6 sind jeweils kammartig ausgebildet, wobei sich die einzelnen Kammzinken in einem vorgegebenen Abstand zueinander befinden, so dass im unbetätigten Zustand des Sensors keine elektrische Verbindung zwischen den Kammzinken der Leiterbahnstruktur 5 und den Kammzinken der Leiterbahnstruktur 6 vorliegt. Der Abstand zwischen den Kammzinken kann ungefähr 100 µm betragen. Auch die Dicke der Kammzinken kann ungefähr 100 µm betragen, wobei auch eine andere Dimensionierung möglich ist. Im Idealfall liegen die Kammzinken oder Leiterbahnstrukturen 5 und 6 möglichst eng aneinander, um einen möglichst sensibel reagierenden Sensor zu bilden.

Des Weiteren weist der Detektionsbereich 4 eine von den Leiterbahnstrukturen 5, 6 in einem unbetätigten Zustand des Sensors beabstandet angeordnete Paste 7 auf. Die Paste 7 befindet sich bei dem in Fig. 1 gezeigten Ausführungsbeispiel in Blickrichtung hinter den Leiterbahnstrukturen 5 und 6. Dabei ist die Paste flächig angeordnet und zwar vorzugsweise im gesamten Bereich der Leiterbahnstrukturen 5 und 6.

Bei einer Betätigung des Sensors wird die Paste 7 mittels Kraft oder Druck in Richtung Leiterbahnstrukturen 5 und 6 bewegt. Dies kann durch einen Druck auf die Paste 7 oder durch einen Druck auf die Leiterbahnstrukturen 5 und 6 erfolgen. Entscheidend ist dabei, dass sich der Abstand zwischen den Leiterbahnstrukturen 5 und 6 und der Paste 7 bei einer Betätigung des Sensors verringert. Durch die Verringerung dieses Abstands verändert sich der Übergangswiderstand zwischen den Leiterbahnstrukturen 5 und 6 und der Paste 7, wobei eine elektrische Verbindung zumindest eines Teilbereichs der beiden Leiterbahnstrukturen 5 und 6 über die Paste 7 erreicht werden kann. Dies hat eine Reduzierung des elektrischen Widerstands des Detektionsbereichs 4 und damit ein kraft- und/oder druckabhängiges Ausgangssignal zur Folge. Im nicht betätigten Zustand ist der elektrische Widerstand des Detektionsbereichs 4 quasi unendlich. Sobald die Paste 7 in Richtung Leiterbahnstrukturen 5 und 6 bewegt wird oder die Leiterbahnstrukturen 5 und 6 berührt, reduziert sich der Widerstand des Detektionsbereichs 4. Je größer die Kraft oder der Druck wird, desto kleiner wird der Widerstand des Detektionsbereichs 4.

Der erfindungsgemäße Sensor weist des Weiteren zwei in Reihe geschaltete Widerstände 8 und 9 auf. Dabei beträgt der Widerstand 8 beispielsweise 1 kΩ. Der zweite Widerstand 9 kann dabei beispielsweise 12 kQ betragen. Der Detektionsbereich 4 des Sensors bildet einen veränderbaren Widerstand 12, der im unbetätigten Zustand des Sensors quasi unendlich ist.

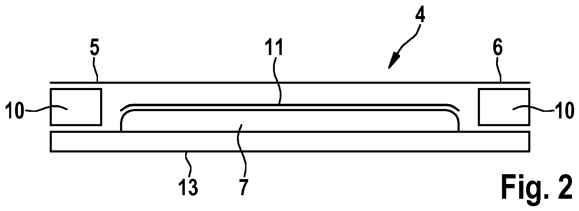

Fig. 2 zeigt das Ausführungsbeispiel aus Fig. 1 in einer durch den Detektionsbereich 4 quer geschnittenen schematischen Darstellung. In dieser Fig. 2 ist erkennbar, dass sich die Paste 7 auf einem als Träger dienenden Medium 13 befindet. Dieses Medium 13 kann beispielsweise eine Folie oder eine Leiterplatte sein. Die Leiterbahnstrukturen 5 und 6 und die Paste 7 des Detektionsbereichs 4 sind durch einen Abstandshalter 10 voneinander separiert, der eine Berührung der Leiterbahnstrukturen 5 und 6 und der Paste 7 im unbetätigten Zustand des Sensors verhindert. Der Abstandshalter 10 kann mehrere Einzelelemente aufweisen, die am Rand oder im Randbereich der Leiterbahnstrukturen 5 und 6 sowie der Paste 7 angeordnet sind.

Auf der Paste 7 ist eine Silber oder Graphit enthaltende Schicht 11 angeordnet. Diese Schicht 11 ist im unbetätigten Zustand des Sensors von den Leiterbahnstrukturen 5 und 6 beabstandet. Die Schicht 11 reduziert den Übergangswiderstand zwischen den Leiterbahnstrukturen 5 und 6 und der Paste 7 bei einer Betätigung des Sensors. Die Schicht 11 begünstigt den zuvor beschriebenen linearen Kennlinienverlauf zumindest in einem Teilbereich einer Kennlinie von Kraft oder Druck und dem Ausgangssignal, das als Ausgangsspannung vorliegen kann. Mit anderen Worten verhalten sich zumindest in einem Teilbereich dieser Kennlinie Kraft oder Druck und das Ausgangssignal direkt proportional zueinander. Bei einer Versorgungsspannung von 13V kann sich das Ausgangssignal beispielsweise zwischen 1V und annähernd 13V bewegen.

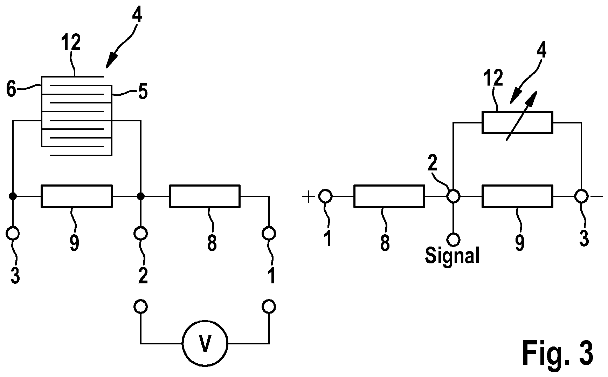

Fig. 3 zeigt im linken Bereich eine Schaltskizze und im rechten Bereich einen Schaltplan des Ausführungsbeispiels aus Fig. 1. Hierbei ist die Reihenanordnung der Widerstände 8 und 9 mit dem zum Widerstand 9 parallel geschalteten veränderbaren Widerstand 12, der durch den Detektionsbereich 4 mit den Leiterbahnstrukturen 5 und 6, der Paste 7 und der Schicht 11 gebildet wird, besonders gut erkennbar. Bei diesem Ausführungsbeispiel wird das Ausgangssignal in Form einer Spannung am Widerstand 8 über die Leiter 1 und 2 abgegriffen.

Bei weiteren Ausführungsformen des erfindungsgemäßen Sensors kann die Schicht 11 auch durch mehrere Einzelschichten aus beispielsweise Silber und/oder Graphit gebildet sein, um einen möglichst linearen Kennlinienverlauf hinsichtlich Kraft oder Druck und beispielsweise einer Ausgangsspannung zu erreichen. Die Verwendung einer druckabhängigen Paste 7 begünstigt diesen linearen Kennlinienverlauf aufgrund ihres besonders geeigneten Übergangswiderstandsverhaltens ebenfalls.

Bei dem erfindungsgemäßen Sensor kann das abgegriffene Spannungssignal ohne weitere aktive Elektronik gemessen werden. Dabei kann das Ausgangssignal bis zu 90% und mehr der Versorgungsspannung betragen. Es liegt ein analoges Ausgangssignal vor. Dabei erfolgt eine Betätigung des Sensors nahezu weglos, da die Leiterbahnstrukturen 5 und 6 und die Paste 7 in einem sehr geringen Abstand zueinander angeordnet sein können. Der Messweg kann dabei weniger als 0,25 mm betragen.

Die durch den Sensor realisierte Schaltung funktioniert ähnlich wie ein Spannungsteiler, wobei an einen der Widerstände 8 und 9 der veränderbare Widerstand 12 parallel angeschlossen wird.

Die durch die Betätigung des Sensors bewirkte Veränderung des elektrischen Widerstands 12 des Detektionsbereichs 4 hat im Wesentlichen drei Ursachen:
- Durch eine Kombination aus Rauigkeit und Widerstand entsteht ein veränderbarer Übergangswiderstand zwischen den Kontaktschichten der Leiterbahnstrukturen 5 und 6 und der Paste 7 und gegebenenfalls der Schicht 11.
- Bei Ausübung eines Drucks auf den Detektionsbereich 4 wird eine Kraft auf einen Flächenbereich des Detektionsbereichs 4 ausgeübt. Je nach Größe dieses Flächenbereichs verändert sich der Widerstand unterschiedlich.
- Eine Komprimierung der Teilchen in der Paste 7 bedingt ebenfalls eine Widerstandsänderung.

Die Veränderung des elektrischen Widerstands 12 des Detektionsbereichs 4 wird durch alle drei oben genannten Effekte in unterschiedlichem Ausmaß bewirkt. Hinsichtlich weiterer vorteilhafter Ausgestaltungen des erfindungsgemäßen Sensors wird zur Vermeidung von Wiederholungen auf den allgemeinen Teil der Beschreibung sowie auf die beigefügten Ansprüche verwiesen.

### Bezugszeichenliste

- 1: Leiter 1
- 2: Leiter 2
- 3: Leiter 3
- 4: Detektionsbereich
- 5: Leiterbahnstruktur
- 6: Leiterbahnstruktur
- 7: Paste
- 8: Widerstand
- 9: Widerstand
- 10: Abstandshalter
- 11: Schicht
- 12: veränderbarer Widerstand
- 13: Medium

## Patentansprüche

1. Sensor mit einem mit einer elektrischen Versorgungsspannung beaufschlagbaren Detektionsbereich (4), wobei sich der elektrische Widerstand (12) des Detektionsbereichs (4) unter Einwirkung von Kraft oder Druck verändert, so dass ein kraft- und/oder druckabhängiges Ausgangssignal erzeugbar ist,
wobei der Detektionsbereich (4) zwei räumlich ineinander greifend angeordnete und elektrisch voneinander getrennte Leiterbahnstrukturen (5, 6) und eine von den Leiterbahnstrukturen (5, 6) in einem unbetätigten Zustand des Sensors beabstandet angeordnete Paste (7) aufweist und
wobei die Paste (7) bei einer Betätigung des Sensors - zur elektrischen Verbindung zumindest eines Teilbereichs der beiden Leiterbahnstrukturen (5, 6) und damit zur Reduzierung des elektrischen Widerstands (12) des Detektionsbereichs (4) - mittels Kraft oder Druck in Richtung Leiterbahnstrukturen (5, 6) bewegbar ist, **dadurch gekennzeichnet, dass** auf der den Leiterbahnstrukturen (5, 6) zugewandten Seite der Paste (7) eine Silber und/oder Graphit enthaltende Schicht (11) auf der Paste (7) angeordnet ist.

2. Sensor nach Anspruch 1, **dadurch gekennzeichnet, dass** die Leiterbahnstrukturen (5, 6) jeweils kammartig ausgebildet sind.

3. Sensor nach Anspruch 1 oder 2, **dadurch gekennzeichnet, dass** die Paste (7) eine druckabhängige Paste (7) ist, deren Durchgangswiderstand sich bei Ausübung von Kraft oder Druck auf die Paste (7) verändert.

4. Sensor nach einem der Ansprüche 1 bis 3, **dadurch gekennzeichnet, dass** zwischen den Leiterbahnstrukturen (5, 6) und der Paste (7) ein Abstandshalter (10) angeordnet ist.

5. Sensor nach einem der Ansprüche 1 bis 4, **dadurch gekennzeichnet, dass** die Paste (7) flächig angeordnet ist.

6. Sensor nach einem der Ansprüche 1 bis 5, **dadurch gekennzeichnet, dass** die Leiterbahnstrukturen (5, 6) und/oder mindestens ein Widerstand (8, 9) und/oder die Paste (7) auf ein bedruckbares Medium (13), vorzugsweise auf eine Folie oder Leiterplatte, aufgedruckt oder aufgebracht sind.

7. Sensor nach einem der Ansprüche 1 bis 6, **dadurch gekennzeichnet, dass** der Sensor zwei in Reihe geschaltete Widerstände (8, 9) und einen zu einem der beiden Widerstände (8, 9) parallel geschalteten und durch den Detektionsbereich (4) gebildeten weiteren Widerstand (12) aufweist.

8. Sensor nach Anspruch 7, **dadurch gekennzeichnet, dass** das Ausgangssignal an einem der beiden Widerstände (8, 9) abgreifbar ist.

## Claims

1. Sensor having a detection region (4) which can be acted on with an electrical supply voltage, wherein the electrical resistance (12) of the detection region (4) changes under the action of force or pressure so that a force-dependent and/or pressure-dependent output signal can be produced,
wherein the detection region (4) has two conductor path structures (5, 6) which are arranged so as to spatially engage one inside the other and which are electrically separated from each other and a paste (7) which is arranged spaced apart from the conductor path structures (5, 6) in a non-activated state of the sensor, and
wherein, when the sensor is activated, the paste (7) - in order to electrically connect at least a part-region of the two conductor path structures (5, 6) and consequently in order to reduce the electrical resistance (12) of the detection region (4) - can be moved by means of force or pressure in the direction of the conductor path structures (5, 6),
**characterised in that** at the side of the paste (7) facing the conductor path structures (5, 6) a silver-containing and/or graphite-containing layer (11) is arranged on the paste (7).

2. Sensor according to claim 1, **characterised in that** the conductor path structures (5, 6) are each constructed in a comb-like manner.

3. Sensor according to claim 1 or 2, **characterised in that** the paste (7) is a pressure-dependent paste (7) whose volume resistance changes when force or pressure is applied to the paste (7).

4. Sensor according to any one of claims 1 to 3, **characterised in that** a spacer (10) is arranged between the conductor path structures (5, 6) and the paste (7).

5. Sensor according to any one of claims 1 to 4, **characterised in that** the paste (7) is arranged in a planar manner.

6. Sensor according to any one of claims 1 to 5, **characterised in that** the conductor path structures (5, 6) and/or at least one resistor (8, 9) and/or the paste (7) are printed on or applied to a printable medium (13), preferably on a film or printed circuit board.

7. Sensor according to any one of claims 1 to 6, **characterised in that** the sensor has two resistors (8, 9) which are connected in series and another resistor (12) which is connected in parallel with one of the two resistors (8, 9) and which is formed by the detection region (4).

8. Sensor according to claim 7, **characterised in that** the output signal can be tapped at one of the two resistors (8, 9) .

## Revendications

1. Capteur avec une partie de détection (4) pouvant être alimentée avec une tension d'alimentation électrique, dans lequel la résistance électrique (12) de la partie de détection (4) est modifiée sous l'effet d'une force ou d'une pression, de façon à pouvoir générer un signal de sortie dépendant d'une force et/ou d'une pression,
dans lequel la partie de détection (4) comprend deux structures à pistes conductrices (5, 6) disposées de manière emboîtée l'une dans l'autre dans l'espace et isolées électriquement l'une de l'autre et une pâte (7) disposées de manière distante des structures à pistes conductrices (5, 6) dans un état non actionné du capteur et
dans lequel la pâte (7) peut être déplacée, lors d'un actionnement du capteur, pour la liaison électrique d'au moins une partie des deux structures à pistes conductrices (5, 6) et donc pour la réduction de la résistance électrique (12) de la partie de détection (4), au moyen d'une force ou d'une pression en direction des structures à pistes conductrices (5, 6),
**caractérisé en ce que**, sur le côté de la pâte (7) orienté vers les structures à pistes conductrices (5, 6), est disposée, sur la pâte (7), une couche (11) contenant de l'argent et/ou du graphite.

2. Capteur selon la revendication 1, **caractérisé en ce que** les structures à pistes conductrices (5, 6) sont conçues sous la forme de peignes.

3. Capteur selon la revendication 1 ou 2, **caractérisé en ce que** la pâte (7) est une pâte dépendant de la pression (7), dont la résistance de transfert varie lors de l'application d'une force ou d'une pression sur la pâte (7).

4. Capteur selon l'une des revendications 1 à 3, **caractérisé en ce que**, entre les structures à pistes conductrices (5, 6) et la pâte (7), est disposé une entretoise (10).

5. Capteur selon l'une des revendications 1 à 4, **caractérisé en ce que** la pâte (7) est disposée à plat.

6. Capteur selon l'une des revendications 1 à 5, **caractérisé en ce que** les structures à pistes conductrices (5, 6) et/ou au moins une résistance (8, 9) et/ou la pâte (7) sont imprimés ou appliqués sur un support imprimable (13), de préférence sur un film ou un circuit imprimé.

7. Capteur selon l'une des revendications 1 à 6, **caractérisé en ce que** le capteur comprend deux résistances (8, 9) branchées en série et une résistance supplémentaire (12) branchée en parallèle avec une des deux résistances (8, 9) et formée par la partie de détection (4).

8. Capteur selon la revendication 7, **caractérisé en ce que** le signal de sortie peut être prélevé au niveau d'une des deux résistances (8, 9).
